# EUROPEAN PATENT APPLICATION

(11) **EP 4 365 986 A1**
(43) Date of publication of application: **08.05.2024**
(21) Application number: 23198575.5
(22) Date of filing: 20.09.2023
(51) Int. Cl.: H01M 4/1391, H01M 4/62, H01M 4/136, H01M 4/1397, H01M 4/505, H01M 4/525, H01M 10/0525

(54) **DRY ELECTRODE, PREPARATION THEREOF AND SOLID-STATE BATTERY**

(30) Priority: 30.09.2022 CN 202211215019
(71) Applicant: Beijing WeLion New Energy Technology Co., Ltd, Beijing 102402 (CN)
(72) Inventor: LI, Jiuming, Beijing, 102402 (CN); HUANG, Wenshi, Beijing, 102402 (CN); CHEN, Ting, Beijing, 102402 (CN); XIAO, Haihong, Beijing, 102402 (CN); YANG, Qi, Beijing, 102402 (CN); YU, Huigen, Beijing, 102402 (CN)
(74) Representative: reuteler & cie SA

(57) **Abstract**

The present disclosure relates to the technical field of solid-state batteries and discloses a dry electrode, a preparation method thereof, and a solid-state battery. The dry electrode comprises an active material, an inorganic solid electrolyte, a conductive agent, a eutectic electrolyte and an optional binder, wherein the eutectic electrolyte is filled in voids between particles of the dry electrode. The present disclosure utilizes the eutectic electrolyte having a characteristic of high phase transition to liquefy the eutectic electrolyte at high temperature at an electrode interface, to enable the eutectic electrolyte to permeate between a cathode and an electrolyte or between a anode and an electrolyte, in order to form a liquid phase eutectic electrolyte with certain ionic conductivity, the liquid phase eutectic electrolyte is then solidified at room temperature to fill voids between solid particles so as to modify the voids of the interface and solve the problem of interface contact. In addition, the eutectic electrolyte has certain ion conductivity, and its ion conductivity performance is better than that of other phase transition materials.

## Description

### CROSS-REFERENCE TO RELATED APPLICATIONS

The application claims the benefit of the Chinese patent application No. "202211215019.9", filed on September 30, 2022, entitled "Dry Electrode, Preparation thereof and Solid-state Battery", the content of which is specifically and entirely incorporated herein by reference.

### FIELD

The present disclosure relates to the technical field of solid-state batteries, in particular to a dry electrode, a preparation method thereof, and a solid-state battery.

### BACKGROUND

The binder Polytetrafluoroethylene (PTFE) used in the existing preparation method of a dry electrode is expanded by heating in the processing process, which will result in a great number of voids in the dry electrode, the voids cause the surface contact to be exacerbated and the impedance to be increased, thereby seriously affecting the ion conduction of the electrode.

In the currently adopted technologies, the voids can be reduced by hot processing or the gaps can be filled by simply injecting a liquid into the electrode. However, in order to ensure the interface contact of the all-solid-state battery, the high-pressure is used for pressing a pole to compact the pole, thus the compact pole has low porosity, the wettability of liquid injection is poor so that it is difficult to ensure the application effect. The method of adding a solvent during the stirring process can also be adopted for solving the problem of voids, however, when the battery is formed, the liquid is prone to separate from voids by gravity, a compact filling the solid-solid interface voids in the electrodes can hardly be achieved.

CN113540395A uses a eutectic solvent to infiltrate the porous solid-state electrolyte pole in order to solve the aforementioned problem faced by the sulfide all-solid-state battery. The scheme adopts a composite of a two-layered electrolyte, so the preparation process is complex.

In addition, by the liquid phase method, blending solvent with the eutectic material may be beneficial for dissolving the solid eutectic material, but the eutectic material is also removed by the heating and drying step during solvent removing , thus the effect of filling the voids can be hardly accomplished.

Therefore, it is important to develop a dry electrode that solves the solid-solid interface problem.

### SUMMARY

The eutectic electrolyte is an eutectic solvent. When the eutectic solvent comprises an electrochemically active species (e.g., a metal salt), the eutectic solvent can be used in battery cell as an electrolyte and is generally referred to as the eutectic electrolyte. The eutectic electrolyte can only be formed when the interaction forces between the different components are greater than the molecular forces of each component per se. Such interaction forces between different molecules typically include hydrogen bonding, Lewis acid-base interaction, and Van Der Waals force. Under these interaction forces, the eutectic electrolyte is similar to an ionic liquid, which only includes the charged ion pairs, and has a lower freezing point than each components. The intermolecular interaction force can be enhanced by altering the mixing ratio of the components, such that the freezing point of the eutectic electrolyte can be regulated and controlled. When the freezing point of the eutectic electrolyte reaches a minimum value, the temperature is called the eutectic point. The eutectic electrolytes have advantages over the other electrolytes, such as low price, safty, the wide electrochemical window and desirable thermal/chemical stability.

The eutectic electrolytes are currently applied in the field of lithium batteries, particularly in the liquid-state electrolyte batteries and the polymer solid-state batteries, the eutectic electrolyte is similar to a metal solid solution, after blending two electrolytes, the blended electrolytes will exhibit a characteristic of lower melting point than that of a single electrolyte. The eutectic electrolytes can only be formed when the interaction force between the different components is greater than the molecular action forces of the individual component per se. The current research on the technology is mainly concentrated on the material composition, broadening the electrochemical window, and interface chemistry between the electrolyte and the electrode.

The present disclosure provides a dry electrode, a preparation method thereof and a solid-state battery, in particular, provides a dry electrode, a preparation method thereof, and a solid-state battery prepared with the dry electrode. The present disclosure utilizes the eutectic electrolyte with high phase transition to liquefy the eutectic electrolyte at high temperature at an electrode interface, to enable the eutectic electrolyte to permeate between a cathode and an electrolyte, or between a anode and an electrolyte. In order to form a liquid phase eutectic electrolyte with certain ionic conductivity, the liquid phase eutectic electrolyte is then solidified at room temperature to fill viods between solid particles so as to modify the voids of the interface and to solve the problem of interface contact. In addition, the eutectic electrolyte has certain ion conductivity, and its ion conductivity performance is better than that of other phase transition materials.

The structural stability of the electrode is improved by converting the eutectic electrolyte with a high melting point from a solid state to a liquid state, then by penetrating the liquid-state eutectic electrolyte into the voids of the electrode material, further by converting the eutectic electrolyte from a liquid-state to a solid-state, subsequently by solidifying the liquid eutectic electrolyte stored at the voids and filling the gaps.

In order to achieve the above object, the first aspect of the present disclosure provides a dry electrode comprising an active material, an inorganic solid electrolyte, a conductive agent, an eutectic electrolyte and, optionally an binder, wherein the eutectic electrolyte is filled in voids between particles of the dry electrode.

In a second aspect, the present disclosure provides a method for preparing the aforementioned dry electrode comprising:
(1) uniformly mixing an active material, an inorganic solid electrolyte, a conductive agent, a binder and a solid-state eutectic electrolyte by adopting a dry blending method to obtain a mixture;
(2) performing a fibrillation treatment on the mixture to obtain dry electrolyte powder;
(3) subjecting the dry electrolyte powder to a hot rolling treatment and then a cooling and a solidifying process to obtain a dry electrolyte.

In a third aspect, the present disclosure provides a solid-state battery comprising a cathode, a solid-state electrode and a anode, wherein the cathode and/or the anode is the aforementioned dry electrode.

The present disclosure takes advantage of the eutectic electrolyte, which may be subject to a solid-liquid transformation through the change of processing temperature. The eutectic electrolyte is filled into the voids between active material and the solid electrolyte particles in an electrode, and the interface contact is optimized, so that the utilization rate of the active material is increased, and the battery performance is improved.

### BRIEF DESCRIPTION OF THE DRAWINGS

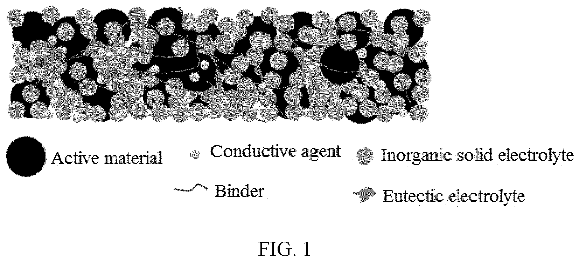

FIG. 1 is a schematic cross-sectional view of a dry electrode prepared by the present disclosure.

### DETAILED DESCRIPTION

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point value of the various ranges, and the individual point values may be combined with one another to produce one or more new numerical ranges, which should be deemed have been specifically disclosed herein.

As mentioned above, FIG. 1 is a schematic cross-sectional view of a dry electrode prepared by the present disclosure, the first aspect of the present disclosure provides a dry electrode comprising an active material, an inorganic solid electrolyte, a conductive agent, a eutectic electrolyte and optionally an binder, wherein the eutectic electrolyte is filled in voids between particles of the dry electrode.

According to the present disclosure, the eutectic electrically has an ionic conductivity within a range from 10⁻⁶ S/cm to 10⁻³ S/cm, for example, the ionic conductivity may be 3.7×10⁻⁶ S/cm, 5.5×10⁻⁶ S/cm, 6.8×10⁻⁶ S/cm, 8.4×10⁻⁶ S/cm, 1.7×10⁻⁵ S/cm, 2.3×10⁻⁵ S/cm, 6.3×10⁻⁵ S/cm, 9.2×10⁻⁵ S/cm, 1.3×10⁻⁴ S/cm, 5×10⁻⁴ S/cm, 9.2×10⁻⁴ S/cm, 10⁻³ S/cm; the ionic connectivity of the eutectic electrolyte in the present disclosure includes, but is not limited to, an interval range formed by any two point values mentioned above. In the present disclosure, the ionic conductivity of the eutectic electrolyte is defined in the above range, the eutectic electrolyte can be liquefied under high temperature liquefaction infiltration between a cathode electrolyte and an electrolyte or between an anode electrolyte and an electrolyte, in order to modify the voids of the interface and solve the problem of interface contact.

According to the present disclosure, the eutectic electrolyte has a melting point within a range from 40°C to 200 °C, in particular, the melting point may be selected from the group consisting of 53°C, 56 °C, 68°C, 75 °C, 83°C, 85°C, 90°C, 107°C, 127°C, 147°C, 150°C, 160°C, 170°C, 180°C, 190°C and 200°C; the melting point of the eutectic electrolyte in the present disclosure includes, but is not limited to, an interval range formed by any two point values mentioned above. The melting point of the eutectic electrolyte is preferably within a range from 53 °C to 150°C, in view of the preferred temperature range of the hot roller press used in the present application, and the cycle performance and filling effect of the prepared dry electrolyte.

According to the present disclosure, the eutectic electrolyte comprises a hydrogen bond donor and a hydrogen bond acceptor; wherein the hydrogen bond donor is one or more selected from the group consisting of thiourea, urea, 1-methylurea, 1,3-dimethylurea, 1,1-dimethylurea, benzamide, tetramethylurea, trifluoroacetamide, trichloroacetylurea, ethylene urea, N,N-dimethylpropyleneurea, ethylene glycol, glycerol and 1,2-butanediol; the hydrogen bond acceptor is one or more selected from the group consisting of lithium hexafluorophosphate LiPF₆, lithium bistrifluoromethane sulfonylimide LITFSI, lithium nitrate LiNO₃, lithium trifluoromethane sulfonate LiCF₃SO₃, lithium tetrafluoroborate LiBF₄, chloroform, zinc chloride, lithium fluoride, lithium nitride, lithium carbonate, lithium perchlorate, lithium hexafluoroarsenate, lithium difluorooxalatoborate and lithium bisoxalatoborate LiBOB.

According to the present disclosure, the molar ratio of the content of the hydrogen bond donor to the hydrogen bond acceptor is (1-6): (1-10), in order to obtain a solid-state eutectic electrolyte with a high melting point. The melting point of eutectic electrolytes according to the binary phase diagram is lower than the melting point of the reactant, and eutectic electrolytes outside the range can hardly obtain a high phase transition temperature.

According to the present disclosure, the weight ratio of the content of the active material, the inorganic solid electrode, the conductive agent, the binder and the electronic electrode is (50-70): (20-40): (1-2): (0.001-3): (0.01-3), preferably (50-70): (20-40): (1-2): 2: 2.

According to the present disclosure, the active material is selected from an oxide cathode active material and/or a sulfide cathode active material.

According to the present disclosure, the oxide cathode active material is one or more selected from the group consisting of lithium cobaltate LiCoO₂, lithium manganate LiMnO₂, lithium nickelate LiNiO₂, lithium vanadate LiVO₂, ternary lithium nickel cobalt manganate LiNi_{1/3}CO_{1/3}Mn_{1/3}O₂, lithium manganate LiMn₂O₄, lithium nickel manganate Li(Ni_{0.5}Mn_{1.5})O₄, lithium iron silicate Li₂FeSiO₄ and lithium iron phosphate LiFePO₄.

According to the present disclosure, the sulfide cathode active material is one or more selected from the group consisting of iron monosulfide FeS, iron sulfide Fe₂S₃, cobalt sulfide CoS, lithium sulfide Li₂S and sulfur.

According to the present disclosure, the inorganic solid-state electrolyte comprises one or more selected from the group consisting of a binary sulfide electrolyte, argyrodite-type sulfide electrolyte and a halide electrolyte.

According to the present disclosure, the binary sulfide electrolyte is one or more selected from the group consisting of 80Li₂S-20P₂S₅, Li₇P₃S₁₁, Li₆PS₅Cl and 70Li₂S-30P₂S₅.

According to the present disclosure, the related-phase argyrodite-type sulfide electrolyte is one or more selected from the group consisting of Li_{5.5}PS_{4.5}Cl_{1.5}, Li₇P₂S₈I, Li₆PS₅Cl, Li_{6.6}P_{0.4}Ge_{0.6}S₅I, Li₇P₂S₈Br_{0.5}I_{0.5}Li_{3.25}Ge_{0.25}P_{0.75}S₄ and Li₁₀GeP₂S₁₂Li₁₁Si₂PS₁₂Li_{9.54}Si_{1.74}P_{1.44}S_{11.7}Cl_{0.3}.

According to the present disclosure, the halide electrolyte is one or more selected from the group consisting of LiInCl₃, LiZrCl₅, LiZrₓFe₁₋ₓCl₅ and LiScCl₃.

According to the present disclosure, the conductive agent comprises one or more selected from the group consisting of Super P, low crystalline carbon, soft carbon, hard carbon, high crystalline carbon, natural graphite, pyrolytic carbon, mesophase pitch-based carbon fibers and mesophase carbon microspheres.

According to the present disclosure, the binder is one or more selected from the group consisting of PTFE, polypropylene, polytetrafluoroethylene, polyvinylidene fluoride and nitrile rubber.

According to the present disclosure, the dry electrode has a thickness within a range of 30-400µm; preferably within a range of 90-110µm.

In a second aspect, the present disclosure provides a method for preparing the aforementioned dry electrode comprising:
(1) uniformly mixing an active material, an inorganic solid electrolyte, a conductive agent, a binder and a solid-state eutectic electrolyte by adopting a dry blending method to obtain a mixture;
(2) performing a fibrillation treatment on the mixture to obtain dry electrolyte powder;
(3) subjecting the dry electrolyte powder to a hot rolling treatment and then to a cooling and to a solidifying process to obtain a dry electrolyte.

According to the present disclosure, the uniform mixing in step (1) is performed by using one or more devices selected from the group consisting of a ball mill, a roller mill, a three-dimensional blender mixer, a bead mill, a shaker and a defoamer.

According to the present disclosure, the fibrillation treatment in step (2) comprises the following steps: carrying out a high-speed shearing and crushing the mixture by adopting a high-shear mixing equipment to implement pre-fibrillation, and then hot rolling the obtained powder to perform a sufficient fibrillation.

According to the present disclosure, the high-shear mixing equipment in step (2) is one or more selected from the group consisting of a jet mill, a high-speed pulverizer and an ultrasonic vibrator.

According to the present disclosure, the conditions of the hot rolling treatment in step (3) comprise a hot rolling temperature within a range from 60°C to 150°C and a linear velocity within a range from 0.8m/min to 1.2 m/min.

In a third aspect, the present disclosure provides a solid-state battery comprising a cathode, a solid-state electrode and a anode, the cathode and/or the anode is the aforementioned dry electrode.

The present disclosure will be described in detail below with reference to examples.

In the following examples and comparative examples,
porosity test: a solvent infiltration method was adopted to test the porosity of the dry cathode, in order to prevent the solvent from dissolving the eutectic electrolyte and the influence on the sulfide electrolyte, heptane was used as the solvent, and the specific method was as follows: the dry electrode with a thickness of 100µm and a diameter φ of 10mm obtained in the Examples was placed in a container including heptane after the pole was fully infiltrated for 12 hours, the pole was taken out and its mass was weighted to be M₁, the pole was dried at 80°C for 1 hour, the mass of dried pole was weighed to be M₂, the density of heptane solvent was denoted as ρ, the appearance volume V of the pole was calculated based on the equation V (the area S × thickness L), and the porosity test result = (M₁-M₂)/ρ/V; the testing was repeated for 3 times to obtain an average value, such that the porosity of the pole was obtained.

### Example 1

The example served to illustrate a dry electrode prepared according to the present disclosure.
(1) preparation method of a eutectic electrolyte: the preparation process was completely carried out in an argon gas environment glove box with water content less than or equal to 0.1ppm, an oxygen content less than or equal to 0.1ppm, a carbon dioxide content less than or equal to 0.1ppm and the temperature of 25°C, the thiourea and LiPF₆ materials were firstly required to subject to dehydration before an experimental operation, and the water content of the materials was ensured to be less than or equal to 10ppm; thiourea and LiPF₆ were blended according to a molar ratio 3: 1 to obtain a eutectic electrolyte;
(2) preparation method of dry electrode: the composite cathode material was prepared by using an active material NCM 811 (D50=3µm), an inorganic solid electrolyte Li₆PS₅Cl (i.e., LPSC, 1µm-3µm) and a conductive agent SP, the materials were blended by using an agate pestle to obtain a first uniform powder; PTFE binder was then added into the first uniform powder according to a mass ratio of 1:100, the materials were mixed by using an agate pestle to obtain a second uniform powder; the eutectic electrolyte was blended with the second uniform powder to obtain a mixture; wherein the mass ratio of active material: inorganic solid electrolyte: conductive agent: binder: eutectic electrolyte was 70:24:1:2: 2;
(3) the blended mixture was fed into a jet mill, the air pressure of an argon pump was adjusted to 0.4Mpa, the jet mill was connected with an argon compressed gas and inflated for 3 minutes, the inlet air pressure was adjusted to 0.03MPa, the grinding gas flow was started, the fibrillation treatment was performed under the condition of adjusting the grinding gas flow to 0.01MPa; then, a hot roller press was used to perform the hot rolling treatment on the mixed powder following the fibrillation treatment, wherein the hot rolling temperature for thermal flattening was 80 °C, and the linear velocity was 1 m/min; the pole was repeatedly rolled into a pole with the thickness of 100µm; the pole was cured after being cooled to room temperature, the dry electrode was obtained.
(4) preparation method of a solid-state lithium-ion battery: the cathode and lithium metal anode prepared with the composite electrolyte layers prepared in Example 1 were pressed in a Teflon mould having a diameter of 10mm according to the sequence of cathode | solid-state electrolyte layer | lithium indium metal, wherein the cathode was dry electrode prepared in the Example, the solid-state electrolyte was 120mg of Li₆PS₅Cl powder, the pressing pressure was 380MPa, and the dwell time was 5min, a solid-state lithium-ion battery was prepared;

The setting of the battery charging and discharging: 1. the step of rest: 20min, the sampling interval was 10s; 2. the battery was charged with a constant current of 0.1C till a voltage of 3.68V, rest for Imin; 3. the battery was discharged with a constant current of 0.1C till a voltage of 1.9V, rest for 1min, step 2 was repeated, the battery with a nominal specific capacity of 200 mAh/g was obtained.

### Examples 2-16

The dry electrode and solid-state lithium-ion battery were prepared according to the same method as in Example 1, except that the molar ratio of the hydrogen bond donor to the hydrogen bond acceptor, the types of the hydrogen bond donor and the hydrogen bond acceptor, the composite cathode material, or the ratio of active material: electrolyte: conductive agent: binder: eutectic electrolyte was different, as shown in Table 1.

### Comparative Example 1

The dry electrode and solid-state lithium-ion battery were prepared according to the same method as that in Example 1, except that the eutectic electrolyte was not added. The details were shown in Table 1.

### Comparative Example 2

The dry electrode and solid-state lithium-ion battery were prepared according to the same method as that in Example 1, except that the hydrogen bond donor, hydrogen bond acceptor, and the molar ratio of the hydrogen bond donor to the hydrogen bond acceptor were different. The specific details were shown in Table 1.

### Comparative Example 3

The dry electrode and solid-state lithium-ion battery were prepared according to the same method as that in Example 1, except that the hydrogen bond donor, hydrogen bond acceptor, and the molar ratio of the hydrogen bond donor to the hydrogen bond acceptor were different. The specific details were shown in Table 1.

**Table 1**

| Example No. | Example 1 | Example 2 | Example 3 | Example 4 |
|---|---|---|---|---|
| Hydrogen bond donor | Thiourea | Thiourea | Thiourea | Thiourea |
| Hydrogen bond acceptor | LiPF₆ | LiPF₆ | LITFSI | LiPF₆ |
| The molar ratio of donor/receptor | 3:1 | 1:8 | 3:1 | 3:1 |
| Ionic conductivity of eutectic electrolyte (S/cm) | 1.7×10⁻⁵ | 1.3×10⁻⁴ | 2.3×10⁻⁵ | 1.7×10⁻⁵ |
| Melting point of eutectic electrolyte (°C) | 127 | 147 | 123 | 127 |
| The ratio of active material: electrolyte: conductive agent: binder: eutectic electrolyte | 70:24:1:2:2 | 70:24:1:2:2 | 70:24:1:2:2 | 70:24:1:2:2 |
| The composite cathode material | NCM/LPSC/SP | NCM/LPSC/SP | NCM/LPSC/SP | NCM/LInCl/SP |

| Example No. | Example 5 | Example 6 | Example 7 | Example 8 |
|---|---|---|---|---|
| Hydrogen bond donor | Thiourea | Thiourea | Thiourea | Urea |
| Hydrogen bond acceptor | LiNO₃ | LiPF₆ | LiPF₆ | LiPF₆ |
| The molar ratio of donor/recepto r | 1:2 | 3:1 | 1:8 | 1:8 |
| Ionic conductivity of eutectic electrolyte (S/cm) | 8.5×10⁻⁶ | 1.7×10⁻⁵ | 1.3×10⁻⁴ | 3.7×10⁻⁶ |
| Melting point of eutectic electrolyte (°C) | 107 | 127 | 147 | 68 |
| The ratio of active material: electrolyte: conductive agent: binder: eutectic electrolyte | 70:24:1:2:2 | 70:24:1:2:2 | 70:24:1:2:2 | 70:24:1:2:2 |
| The composite cathode material | NCM/LPSC/S P | NCM/Li₇P₃S₁₁/S P | NCM/LGPS/S P | NCM/LPSC/S P |

| Example No. | Example 9 | Example 10 | Example 11 | Example 12 |
|---|---|---|---|---|
| Hydrogen bond donor | 1-methylurea | 1,3-dimethylurea | Thiourea | Thiourea |
| Hydrogen bond acceptor | LiNO₃ | LiPF₆ | LiPF₆ | LiPF₆ |
| The molar ratio of donor/ receptor | 1:9 | 1:10 | 3:1 | 3:1 |
| Ionic conductivity of eutectic electrolyte (S/cm) | 1.8×10⁻⁷ | 2.5×10⁻⁷ | 1.7×10⁻⁵ | 1.7×10⁻⁵ |
| Melting point of eutectic electrolyte (°C) | 85 | 56 | 127 | 127 |
| The ratio of active material: electrolyte: conductive agent: binder: eutectic electrolyte | 70:24:1:2:2 | 70:24:1:2:2 | 50:40:2:2:2 | 70:20:2:2:5 |

| Example No. | Example 13 | Example 14 | Example 15 | Example 16 |
|---|---|---|---|---|
| Hydrogen bond donor | Benzamide | Trifluorohexan-amide | Ethylene urea | Thiourea |
| Hydrogen bond acceptor | LiCF₃SO₃ | LiBF₄ | LITFSI | ZnCl₂ |
| The molar ratio of donor/receptor | 1:2 | 2.5:1 | 1:2 | 1:8 |
| Ionic conductivity of eutectic electrolyte (S/cm) | 5.5×10⁻⁶ | 4.3×10⁻⁷ | 8.4×10⁻⁶ | 6.8×10⁻⁶ |
| Melting point of eutectic electrolyte (°C) | 75 | 53 | 83 | 53 |
| The ratio of active material: electrolyte: conductive agent: binder: eutectic electrolyte | 70:24:1:2:2 | 70:24:1:2:2 | 70:24:1:2:2 | 70:24:1:2:2 |

| Comparative Example No. | Comparative | Comparative | Comparative | |
|---|---|---|---|---|
| Hydrogen bond acceptor | - | LITFSI | LITFSI | |
| The molar ratio of donor/receptor | - | 1:3.5 | 5:1 | |
| Ionic conductivity of eutectic electrolyte (S/cm) | - | 7.5×10⁻⁵ | 1.1×10⁻⁶ | |
| Melting point of eutectic electrolyte (°C) | - | 2 | -12 | |
| Active material: electrolyte: conductive agent: binder: eutectic electrolyte | 70:24:1:2 | 70:24:1:2:2 | 70:24:1:2:2 | |
| The composite cathode material | NCM/LPSC/SP | NCM/LPSC/SP | NCM/LPSC/SP | |
| Binder | PTFE | PTFE | PTFE | |
| Electrolyte | Li₆PS₅Cl | Li₆PS₅Cl | Li₆PS₅Cl | |
| Counter electrode | Li-In | Li-In | Li-In | |

### Test Example 1

In order to highlight the improved stability of the dry electrode on the interface after the eutectic material was used, the cycle stability of the battery was tested, the impedance of the battery at the first cycle, 50 cycles, and 100 cycles, and the EIS impedance were fitted; the specific EIS test method was as follows: testing was performed by using an electrochemical workstation, wherein the bias voltage was 0.1V, and the alternating current frequency was within a range from 0.1 HZ to 100,000 HZ; after fitting and analyzing the obtained EIS impedance diagram, the Ohmic impedance R0, the interface impedance R1 between the electrolyte and the cathode, and the interface impedance R2 between the anode and the electrolyte were obtained, and the interface impedance R1 at different cycles was compared. The specific details were shown in Table 2.

Note that: the ternary battery has a nominal specific capacity of 200 mAh/g.

**Table 2**

| Items | Reversible gram capacity exertion (mAh/g) | Cycles @ capacity retention % | R1 at first cycle (Ω) | R1 after 50 cycles (Ω) | R1 after 100 cycles (Ω) |
|---|---|---|---|---|---|
| Example 1 | 191 | 501@80% | 6 | 32 | 45 |
| Example 2 | 198 | 485@80% | 13 | 41 | 86 |
| Example 3 | 183 | 323@80% | 26 | 118 | 234 |
| Example 4 | 187 | 423@80% | 15 | 67 | 78 |
| Example 5 | 185 | 287@80% | 35 | 256 | 526 |
| Example 6 | 187 | 452@80% | 22 | 53 | 82 |
| Example 7 | 192 | 309@80% | 25 | 59 | 86 |
| Example 8 | 181 | 395@80% | 16 | 53 | 65 |
| Example 9 | 180 | 419@80% | 22 | 78 | 120 |
| Example 10 | 182 | 385@80% | 23 | 79 | 112 |
| Example 11 | 198 | 525@80% | 5 | 23 | 28 |
| Example 12 | 145 | 181@80% | 6 | 125 | 225 |
| Example 13 | 181 | 364@80% | 23 | 56 | 145 |
| Example 14 | 186 | 294@80% | 45 | 120 | 235 |
| Example 15 | 175 | 254@80% | 56 | 156 | 289 |
| Example 16 | 182 | 245@80% | 23 | 45 | 125 |
| Comparative Example 1 | 168 | 102@80% | 23 | 285 | 694 |
| Comparative Example 2 | 171 | 83@80% | 29 | 86 | 152 |
| Comparative | 153 | 78@805 | 85 | 198 | 562 |
| Example 3 | | | | | |

### Test Example 2

The porosity test was performed on the dry electrolyte poles prepared in Examples 1-16 and Comparative Examples 1-3, in order to highlight that the eutectic system materials can fill the voids between the particle densities, reduce the porosity and improve the compaction density.

DSC test method: the temperature rise rate was 2 °C/min, the starting temperature of the test was -20°C, the cut-off temperature was 300°C, and the weight of the sample was from 3g to 5g.

The specific details were illustrated in Table 3.

**Table 3**

| Items | Compaction density g/cm³ | Porosity % | DSC test transition temperature (°C) |
|---|---|---|---|
| Example 1 | 3.2 | 8.2 | 127 |
| Example 2 | 3.1 | 8.7 | 147 |
| Example 3 | 3.1 | 9.1 | 123 |
| Example 4 | 3.6 | 8.2 | 127 |
| Example 5 | 3 | 8.6 | 107 |
| Example 6 | 3.1 | 7.3 | 127 |
| Example 7 | 3.2 | 8.3 | 127 |
| Example 8 | 3.1 | 8.3 | 68 |
| Example 9 | 3.2 | 8.6 | 85 |
| Example 10 | 3.1 | 8.4 | 56 |
| Example 11 | 2.7 | 7.2 | 127 |
| Example 12 | 3 | 6.3 | 127 |
| Example 13 | 3.1 | 8.4 | 75 |
| Example 14 | 3.1 | 8.1 | 53 |
| Example 15 | 3.1 | 8.2 | 83 |
| Example 16 | 2.9 | 15.6 | 53 |
| Comparative Example 1 | 2.9 | 22.3 | / |
| Comparative Example 2 | 3 | 15.7 | 2 |
| Comparative Example 3 | 2.8 | 19.2 | -12 |

Remarks:
the testing of the "porosity %" in Comparative Example 2 was performed under a temperature environment from -2°C to 0°C;
the testing of the "porosity %" in Comparative Example 3 was performed under a temperature environment from -20°C to -15 °C;
the testing of the "porosity %" in Examples 1-16 and Comparative Example 1 was performed under a temperature environment from 24°C to 26°C.

As can be seen from the above results: Examples 1-2 demonstrate that the eutectic electrolyte with different ionic conductivity and melting points can be formed by using the same hydrogen bond donor and hydrogen bond acceptor in different molar ratios.

Example 3 shows that the first cycle interface impedance obtained by using LITFSI lithium salt is higher than that obtained by using LiPF₆ under the circumstance of the same hydrogen bond donor, both the impedance after 50 cycles and the impedance after 100 cycles increase significantly.

When the halide electrolyte is used in Example 4, given that the ionic conductivity of the halide is relatively low, the battery performance deteriorates.

Examples 6 and 7 mainly serve to broaden the choice scopes of sulfide electrolytes, the Li₇P₃S₁₁ electrolyte is selected.

Example 8 is compared with Example 1, the ionic conductivity of a solid-state gel formed after curing urea/LiPF₆ versus that after curing thiourea/LiPF₆, the results indicate that the ionic conductivity of urea/LiPF₆ is less than that of thiourea/LiPF₆.

Examples 9 and 10 broaden the scope of eutectic electrolytes by selecting different hydrogen bond donor species by using 1-methylurea/LiNO₃ and the benzamide LiCF₃SO₃.

Example 11 is in contrast to Example 1 in order to broaden the scopes of eutectic electrolytes and ratio, the difference is that more electrolytes facilitates the establishment of ionic transport pathways and electronic transport pathways, meanwhile, an more electrolytes leads to lower porosity and decreased compaction density.

Example 12 is compared to Example 1 in order to broaden the scopes of eutectic electrolytes and ratio. Reducing the electrolyte will cause a decrease in the performance of the composite electrolyte and battery.

Example 16 is in comparison with the Comparative Example 1, when the ratio of thiourea to ZnCl₂ is 1:8, the corresponding phase transition temperature is 53°C, the mixture is in a liquid phase at room temperature, after compounding the mixture with a dry electrode, the desired effect of sufficiently filling the voids in the present disclosure cannot be achieved, resulting in the incomplete filling of voids.

Comparative Example 1 is a blank control experiment, it shows a significant improvement in cycling stability, gram-capacity exertion, and porosity by using an eutectic electrolyte over the Comparative Example 1 without using an eutectic electrolyte.

In contrast to Example 1, when the ratio of thiourea to LITFSI in Comparative Example is 1:3.5, the corresponding phase transition temperature is 2 °C ; the methylacetamide/LTFSI combination in Comparative Example 3 is also a liquid phase at room temperature, the above Comparative Examples fail to achieve the desired effect of the present disclosure that the voids are sufficiently filled due to the action of gravity after compounding the combination with a dry electrode, resulting in an incomplete filling of voids.

The above content describes in detail the preferred embodiments of the present disclosure, but the present disclosure is not limited thereto. A variety of simple modifications can be made in regard to the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

## Claims

1. A dry electrode comprising an active material, an inorganic solid electrolyte, a conductive agent, a eutectic electrolyte and optionally a binder, wherein the eutectic electrolyte is filled in voids between particles of the dry electrode.

2. The dry electrode according to claim 1, wherein the eutectic electrically has an ionic conductivity within a range from 10⁻⁶ S/cm to 10⁻³ S/cm;
and/or the eutectic electrolyte has a melting point within arrange from 40°C to 200 °C, preferably within a range from 53 °C to 150°C.

3. The dry electrode according to claim 1 or 2, wherein the eutectic electrolyte comprises a hydrogen bond donor and a hydrogen bond acceptor;
and/or the hydrogen bond donor is one or more selected from the group consisting of thiourea, urea, 1-methylurea, 1,3-dimethylurea, 1,1-dimethylurea, benzamide, tetramethylurea, trifluoroacetamide, trichloroacetylurea, ethylene urea, N,N-dimethylpropyleneurea, ethylene glycol, glycerol and 1,2-butanediol;
and/or the hydrogen bond acceptor is one or more selected from the group consisting of lithium hexafluorophosphate LiPF₆, lithium bistrifluoromethane sulfonylimide LITFSI, lithium nitrate LiNO₃, lithium trifluoromethane sulfonate LiCF₃SO₃, lithium tetrafluoroborate LiBF₄, chloroform, zinc chloride, lithium fluoride, lithium nitride, lithium carbonate, lithium perchlorate, lithium hexafluoroarsenate, lithium difluorooxalatoborate and lithium bisoxalatoborate LiBOB.

4. The dry electrode according to claim 3, wherein the molar ratio of the content of the hydrogen bond donor to the hydrogen bond acceptor is (1-6): (1-10).

5. The dry electrode according to any one of claims 1-4, wherein the weight ratio of the content of the active material, the inorganic solid electrode, the conductive agent, the binder and the electronic electrode is (50-70): (20-40): (1-2): (0.001-3): (0.01-3).

6. The dry electrode according to claim 1 or 5, wherein the active material is selected from an oxide cathode active material and/or a sulfide cathode active material;
and/or the oxide cathode active material is one or more selected from the group consisting of lithium cobaltate LiCoO₂, lithium manganate LiMnO₂, lithium nickelate LiNiO₂, lithium vanadate LiVO₂, ternary lithium nickel cobalt manganate LiNi_{1/3}CO_{1/3}Mn_{1/3}O₂, lithium manganate LiMn₂O₄, lithium nickel manganate Li(Ni_{0.5}Mn_{1.5})O₄, lithium iron silicate Li₂FeSiO₄ and lithium iron phosphate LiFePO₄;
and/or the sulfide cathode active material is one or more selected from the group consisting of iron monosulfide FeS, iron sulfide Fe₂S₃, cobalt sulfide CoS, lithium sulfide Li₂S and sulfur;
and/or, the inorganic solid-state electrolyte comprises one or more selected from the group consisting of a binary sulfide electrolyte, a related phase argyrodite-type sulfide electrolyte and a halide electrolyte; and/or the binary sulfide electrolyte is one or more selected from the group consisting of 80Li₂S-20P₂S₅, Li₇P₃S₁₁, Li₆PS₅Cl and 70Li₂S-30P₂S₅;
and/or the related-phase argyrodite-type sulfide electrolyte is one or more selected from the group consisting of Li_{5.5}PS_{4.5}Cl_{1.5}, Li₇P₂S₈I, Li₆PS₅Cl, Li_{6.6}P_{0.4}Ge_{0.6}S₅I, Li₇P₂S₈Br_{0.5}I_{0.5}Li_{3.25}Ge_{0.25}P_{0.75}S₄ and Li₁₀GeP₂S₁₂Li₁₁Si₂PS₁₂Li_{9.54}Si_{1.74}P_{1.44}S_{11.7}Cl_{0.3};
and/or the halide electrolyte is one or more selected from the group consisting of LiInCl₃, LiZrCl₅, LiZrxFe1-xCl₅ and LiScCl₃;
and/or, the conductive agent comprises one or more selected from the group consisting of Super P, low crystalline carbon, soft carbon, hard carbon, high crystalline carbon, natural graphite, pyrolytic carbon, mesophase pitch-based carbon fibers and mesophase carbon microspheres.

7. The dry electrode according to any one of claims 1-6, wherein the dry electrode has thickness within a range of 30-400µm.

8. A method for preparing the dry electrode according to any one of claims 1-7 comprising:
(1) uniformly mixing an active material, an inorganic solid electrolyte, a conductive agent, a binder and a solid-state eutectic electrolyte by adopting a dry blending method to obtain a mixture;
(2) performing a fibrillation treatment on the mixture to obtain dry electrolyte powder;
(3) subjecting the dry electrolyte powder to a hot rolling treatment and then a cooling and solidifying process to obtain a dry electrolyte.

9. The method according to claim 8, wherein the uniform mixing in step (1) is performed by using one or more devices selected from the group consisting of a ball mill, a roller mill, a three-dimensional blender mixer, a bead mill, a shaker and a defoamer.

10. The method according to claim 8, wherein the fibrillation treatment in step (2) comprises the following steps: carrying out a high-speed shearing and crushing on the mixture by adopting a high-shear mixing equipment to implement a pre-fibrillation, and then hot rolling the obtained powder to perform a sufficient fibrillation.

11. The method according to claim 10, wherein the high-shear mixing equipment in step (2) is one or more selected from the group consisting of a jet mill, a high-speed pulverizer and an ultrasonic vibrator;
and/or the conditions of the hot rolling comprise a temperature within a range from 80°C to 120°C;
and/or, the conditions of the hot rolling treatment in step (3) comprise a hot rolling temperature within a range from 60 °C to 150°C and a linear velocity within a range from 0.8m/min to 1.2 m/min.

12. A solid-state battery comprising a cathode, a solid-state electrode, and a anode, wherein the cathode and/or the anode is the dry electrode according to any one of claims 1-7, or the dry electrode prepared with the method according to any one of claims 8-11.
